# EUROPEAN PATENT SPECIFICATION

(11) **EP 1 024 419 B1**
(45) Date of publication and mention of the grant of the patent: **19.12.2001**
(21) Application number: 00500005.4
(22) Date of filing: 18.01.2000
(51) Int. Cl.: G05B 19/401, B23B 25/06

(54) **Device on the turret of a lathe for sensing the workpiece**
Vorrichtung am Revolverkopf einer Drehbank zur Detektion des Werkstück
Dispositif sur la tourette d'un tour pour la détection de la pièce

(30) Priority: 26.01.1999 ES 9900186 U
(43) Date of publication of application: 02.08.2000
(73) Proprietor: Danobat, S. Coop., 20870 Elgoibar (Guipuzcoa) (ES)
(72) Inventor: Arrizabalaga, Cesar Arriola, 20870 Elgoibar (Guipuzcoa) (ES)

(56) References cited:
- EP-A- 0 877 307
- GB-A- 2 141 364
- US-A- 4 576 069

## Description

### TECHNICAL FIELD

The present device relates to devices for pushing the work-piece on a lathe and for measuring its initial position in the axial direction relative to the tool-holder turret, which uses a pusher head for work-piece sensing and an electrical sensor.

### PRIOR STATE OF THE ART

A device comprising the features of the preamble of claim 1 is known from GB-A-2 141 364.

Devices are known for measuring the position of the work piece on a horizontal lathe. When the piece to be turned is, for instance, a camshaft which is going to be machined at various points of its length along the axis "Z", the control unit governing the turret movement "z" should first record the zero position of the work-piece corresponding to the free end of the work piece, which will be the datum point of the dimensional values "z" relative to the movement of the turret.

EP-877307 (ES-P9701007) describes a device for measuring the reference position of the work-piece to be turned, which is secured on the lathe headstock table. The measuring apparatus is of the optical type with a graduated scale and a sliding reading head, which moves with the work-piece pusher head. The electrical signal issued of the position of the work piece associates it with a reference position of the tool-holder turret, by way of the lathe control unit, for axial movements of the. turret during machining. Some lathes do not permit the installation of a device in this way on the side of the headstock, which means that the device for measuring the position of the work-piece has to be installed on the turret.

The same document EP-877307 discloses an earlier device for measuring the "zero" position of the piece to be turned on the lathe. This device on the turret has no head that pushes the work-piece towards the clamping chuck. It only has a rocking feeler fitted perpendicular to the movement of the work-piece, which rocks on coming up against the work-piece and actuates a switch that transmits a signal of the position to the control unit. The position measurement obtained in this way depends on the perpendicularity of the feeler relative to the axis "Z" of turret movement and on the perpendicularity and state of the contact face surface at the end of the work-piece. This feeler has to touch four different points of this face in order to construct a datum plane of the work-piece.

### DISCLOSURE OF THE INVENTION

The object of the present invention is a device for measuring the position of the work-piece to be turned, installed on the tool-holder turret of a lathe, as defined in claim 1.

The device according to the invention is attached to the turret tool-holder disc and it has an external head that pushes the work - piece forward in the direction of the machining axis "Z", up to the stop position inside the clamping chuck. When the work-piece reaches this stop in the chuck, the pusher head retracts inside the measuring device, overcoming the resistance of an inner return spring, and actuates a feeler connected to a position sensor at the back of the device.

The position of the free end of the device detected is taken by the lathe electronic control unit as the datum point of the work-piece machining dimensional values "z" and as the reference for the axial movements of the turret. In this way the work-piece is pushed and its initial position for machining is detected by a single axial movement of the turret, after a single prior turn of the turret to position the pushing and sensing device on the lower face of the tool-holder disc.

On its front contact face the pusher head has a detachable disc, which can be removed for replacement when it is worn out.

### DESCRIPTION OF THE DRAWINGS

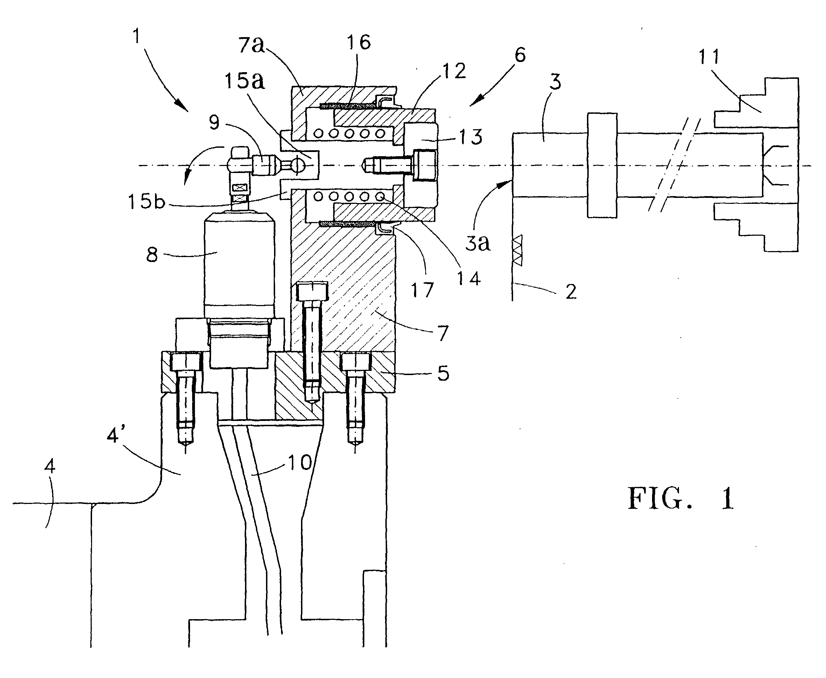

FIG.1 is a cross-sectional view of a device for work-piece pushing and sensing, according to the invention.

### DETAILED DESCRIPTION OF THE INVENTION

With reference to fig. 1, a preferred device 1 for pushing and sensing the "zero" position of the work-piece 3 to be turned - indicated with number 2 - is positioned on the turret 4 of a lathe on the tool-holder disc 4', and it comprises a device support plate 5 attached to one of the peripheral flat surfaces of the tool-holder disc 4', a pedestal 7 fixed to the support plate 5 provided with an integral housing 7a, a pusher head 6 fitted in the housing 7a, an electrical position sensor 8 with a feeler 9 attached, also supported on the plate 5 and situated behind the pusher head 6, on its side opposite to that of the work-piece 3.

The pusher head 6 comprises an outer bushing 12, which stands proud of the front of the housing 7a towards the work-piece 3, a detachable contact disc 13 inserted in the front face of the bushing 12, a helical return spring 14 resting on an inner wall of the housing 7a, and a central measuring spindle 15a, 15b coaxial with the work-piece 3, which moves with the pusher head 6 and makes contact with the feeler 9.

When the work-piece 3 is fitted in the lathe chuck, the turret 4 slides in direction Z and the head 6 pushes the work piece 3 to a position stop inside the chuck 11. The head 6 then retracts insides its housing 7a, overcoming the resistance of the return spring 14, and the spindle 15a, 15b reaches and touches the tip of the feeler 9 generating the electrical signal indicating the position 2 of the free end 3a of the work - piece. The sensor 8 has an inductive transmitter 10 for the electrical signal indicating detection of the feeler 9.

The free end of the measuring spindle 15a, 15b passes through the housing 7a towards the feeler 9, and it has an axial rear cavity 15a for housing the tip of the feeler 9, inside which it will make the contact that energizes the position sensor 8.

The detachable pusher disc 13 offers up the impact surface of head 6 against the work-piece 3 and the spring 14 makes the pusher head 6 return to its rest position. The pusher head 6 remains in the rest condition in a position relative to the pedestal 7 that is always the same due to the fact that the measuring spindle 15a, 15b has a flange 15b at its free end outside the housing 7a which comes up against the latter, thereby restricting the return movement of the pusher head 6.

After sensing the "zero" position 2 of the work-piece, the tool-holder disc 4' revolves to select one of the tools and the turret carries out a movement "z" in reference to this "zero" position of the work-piece 3 in order to perform the machining. To assist the sliding of the pusher head 6 in the seat in the housing 7a, a bearing 16 is coupled to the pusher head bushing 12. The bearing and the seat in the housing 7a are protected against dirt penetration by means of a sealing ring 17.

## Claims

1. A device for sensing the position of a work-piece (3) to be machined on a lathe, fitted on the tool-holder turret (4), which moves in a linear direction in order to measure the work-piece "zero" position, said device (1) comprising a support pedestal (7) fixable on the turret (4), a feeler (9) of the datum end (2) of the work-piece (3) and an electrical position sensor (8) connected to the feeler (9), **characterised in that** the device (1) is supportable on a flat face (4') of the turret (4) and is constructed by means of a pusher head (6) for pushing and sensing the "zero" position of the work-piece, which comprises a retractable bushing (12) provided with a detachable front disc (13) that contacts the work-piece (3) and with a central measuring spindle (15a, 15b) having a internal rear surface (15a) for contact with the feeler (9).

2. The device for sensing the position (2) of the work-piece (3) of claim 1, wherein the pusher head (6) is installed in a protective housing (7a) and the feeler (9) is arranged in an axial direction and is housed in a rear cavity (15a) in the central measuring spindle (15a, 15b), which is retractable and has two rear return stops (15b) against the protective housing (7a) and against the support pedestal (7), respectively.

## Patentansprüche

1. Vorrichtung für die Detektion der Stellung eines in einer Drehmaschine mechanisch zu bearbeitenden Werkstücks (3), welche am Werkzeughalterturm (4) vorgesehen ist, de sich linear für die Messung der "Null"-Stellung des Werkstücks verschiebt, wobei die Vorrichtung (1) einen am Turm (4) montierbaren Stützsockel (7), einen am Ende (2) des Werkstücks angeordneten Fühler (9) und einen elektrischen Stellungssensor (8) umfasst, der mit dem Fühler (9) verbunden ist, **dadurch gekennzeichnet, dass** die Vorrichtung (1) auf einer flachen Seite (4') des Turmes (4) abgestützt werden kann und aus einem Schubkopf (6) für die Vorwärtsbewegung und Detektion der "Null"-Stellung des Werkstücks besteht, der eine zurückziehbare Buchse (12), die mit einer zusätzlichen Frontscheibe (13) ausgestattet ist, welche mit dem Werkstück (3) in Berührung kommt, sowie eine zentrale Messachse (15a, 15b) enthÄlt und eine hintere Fläche (15a) für die Berührung mit dem Fühler (9) aufweist.

2. Vorrichtung für die Erfassung der Stellung des Werkstücks (3) gemäss Anspruch 1, bei welcher der Schubkopf (6) in einem Schutzgehäuse (7a) montiert wird und der Fühler (9) in axialer Richtung angeordnet ist und in einer hinteren Ausbuchtung (15a) der Messachse (15a, 15b) liegt, die zurückziehbar ist und zwei hintere Rückholanschläge (15b) gegen das Schutzgehäuse (7a) und den Stützsockel (7) aufweist.

## Revendications

1. Un dispositif pour la détection de la position d'une pièce (3) à usiner dans un tour, placé sur la tourelle (4) porte-outil, laquelle se déplace en linéaire pour la mesure de la position (2) « zéro » de la pièce, le dispositif (1) comprenant un socle de support (7) qui peut être fixé sur la tourelle (4), un palpeur (9) de l'extrémité (2) origine de la pièce (3) et un senseur (8) de position électrique raccordé au palpeur (9), **caractérisé en ce que** le dispositif (1) peut être supporté sur une face (4') plane de la tourelle (4) et est construit à partir d'une tête de poussée (6) pour la poussée et la détection du « zéro » de la pièce, qui comprend une douille (12) rétractile pourvue d'un disque (13) frontal postiche qui fait contact avec la pièce (3) et d'un essieu central (15a, 15b) de mesure ayant une surface (15a) arrière de contact avec le palpeur (9).

2. Le dispositif pour la détection de la position (2) de la pièce (3) de la revendication 1, où la tête de poussée (6) est installée sur une carcasse (7a) protectrice et le palpeur (9) est disposé en direction axiale et est logé dans une cavité (15a) à l'arrière de l'axe (15a, 15b) de mesure, lequel est rétractile et a deux butées (15b) arrières de rappel contre la carcasse (7a) protectrice et contre le socle de support (7), respectivement.
